# EUROPÄISCHE PATENTSCHRIFT

(11) **EP 3 775 785 B1**
(45) Veröffentlichungstag und Bekanntmachung des Hinweises auf die Patenterteilung: **23.02.2022**
(21) Anmeldenummer: 19710397.1
(22) Anmeldetag: 11.03.2019
(51) Int. Cl.: G01D 5/54, G01D 5/20, G01D 5/245, G01D 5/241

(54) **VORRICHTUNG ZUR BESTIMMUNG EINER POSITION EINES SICH BEWEGENDEN TEILS UND VERFAHREN ZU DEREN BETRIEB**
DEVICE FOR DETERMINING A POSITION OF A MOVING PART AND METHOD FOR THE OPERATION THEREOF
DISPOSITIF PERMETTANT DE DÉTERMINER LA POSITION D'UNE PIÈCE EN MOUVEMENT ET SON PROCÉDÉ D'OPÉRATION

(30) Priorität: 28.03.2018 DE 102018107416
(43) Veröffentlichungstag der Anmeldung: 17.02.2021
(73) Patentinhaber: HELLA GMBH & CO. KGAA, 59552 Lippstadt (DE)
(72) Erfinder: IRLE, Henning, 59557 Lippstadt (DE); UTERMÖHLEN, Fabian, 59557 Lippstadt (DE)
(86) Internationale Anmeldenummer: PCT/EP2019/055978
(87) Internationale Veröffentlichungsnummer: WO 2019/185336

(56) Entgegenhaltungen:
- EP-A2- 0 501 453
- DE-A1-102009 043 977
- DE-A1-102015 016 601

## Beschreibung

### Neue Beschreibung

Die vorliegende Erfindung bezieht sich auf eine Vorrichtung zur Bestimmung einer Position eines sich bewegenden Teils der im Oberbegriff des Anspruchs 1 genannten Art sowie ein Verfahren zum Betreiben einer derartigen Vorrichtung.

Derartige Vorrichtungen zur Bestimmung einer Position eines sich bewegenden Teils sowie Verfahren zu deren Betrieb sind aus dem Stand der Technik in zahlreichen Ausführungsvarianten bereits bekannt.

Beispielsweise ist aus der EP 2 383 558 A1 ein induktiver Winkelsensor zur Bestimmung von Drehmoment und relativer Winkelstellung bezüglich einer Referenzposition, umfassend Mittel zum Erfassen von Winkeln und Differenzwinkeln sowie Mittel zum Indexieren bei Durchfahren der Referenzposition mit einem Dauermagneten und einem Hall-Sensor, bekannt. Um einen preiswert und kompakt herstellbaren Drehmomentsensor mit Winkelbestimmung und Indexierung zu schaffen, wird vorgeschlagen, dass dem Hall-Sensor ein Flussleitblech zugeordnet ist, das in der Referenzposition den Fluss des Dauermagneten zu dem Hall-Sensor leitet.

Die DE 10 2009 043 977 A1 gibt einen kapazitiven Codierer zum Gewinnen der Positionsdaten eines beweglichen Elements mit geringem Energieverbrauch an, umfassend einen Stator mit mindestens drei Erregungselektroden und einer Empfangselektrode, ein bewegliches Element mit zu den Erregungselektroden korrespondierenden Verbindungselektroden und eine mit den Verbindungselektroden verbundene und der Empfangselektrode gegenüberliegend angeordnete Sendeelektrode. Mittels eines Erregungsmittels werden periodisch bestimmte Erregungssignale an die Erregungselektroden angelegt, wobei mittels einer Signalverarbeitungsvorrichtung Erfassungssignale verarbeitet werden, die in Abhängigkeit der vorgenannten Erregungssignale in den Verbindungselektroden erzeugt und von der Empfangselektrode über die Sendeelektrode empfangen werden.

Ferner sind aus der DE 10 2015 016 601 A1 eine Verschiebungsmessvorrichtung und ein Verschiebungsmessverfahren bekannt, die einen Phasendetektor aufweisen, der das Folgende umfasst: Einen Abtastsignalgenerator, welcher dafür konfiguriert ist, ein Abtastsignal bei einer Flanke eines Maßstabssignals zu erzeugen, einen Zähler zum Vorwärtszählen eines Zählwerts in Abhängigkeit eines Taktsignals, wobei der Zähler den Zählwert zu einem durch das Abtastsignal angewiesenen Zeitpunkt ausgibt, eine Flankenpolaritätsermittlungseinrichtung zur Ermittlung einer ansteigenden Flanke oder einer fallenden Flanke einer Flankenpolarität des Maßstabssignals und zur Erzeugung eines Anpassungssignals, wenn es sich um eine fallende Flanke handelt, und eine Anpassungseinrichtung zur Addition eines vorgegebenen Anpassungsbetrags zu dem vom Zähler ausgegebenen Zählwert bei Empfang des Anpassungssignals.

Darüber hinaus zeigt die EP 0 501 453 A2 eine Kombination aus einem optischen und einem kapazitiven Positionsgeber oder einem magnetischen und einem kapazitiven Positionsgeber. Das daraus bekannte Absolutpositionsbestimmungssystem, umfasst: Einen Skalenabschnitt, der ein erstes und ein zweites regelmäßiges Muster umfaßt, wobei das erste und das zweite Muster jeweils aus Materialien aufgebaut ist, die mit ersten und zweiten Abfragesignalen qualitativ unterschiedlichen Typs in Wechselwirkung stehen; einen Transceiverabschnitt, der erste und zweite Übertragungsvorrichtungen zum Übertragen der ersten und zweiten Abfragesignale an die Skala aufweist, und der ebenfalls erste und zweite Empfangsvorrichtungen zum Empfangen der Abfragesignale nach Wechselwirkung mit der Skala umfaßt; Halterungsvorrichtungen zum beweglichen Haltern der Skala und des Transceiverabschnitts relativ zueinander; Signalerzeugungsvorrichtungen, die an den Transceiverabschnitt zum Erzeugen der ersten und zweiten Abfragesignale angeschlossen sind; und Signalverarbeitungsvorrichtungen, die elektronisch an die erste und zweite Empfangsvorrichtung angeschlossen sind, um die Abfragesignale nach Wechselwirkung mit der Skala zu verarbeiten und die Position der Skala relativ zu dem Transceiverabschnitt innerhalb einer vorbestimmten Fehlermarge zu bestimmen. Das erste und das zweite regelmäßige Muster sind in ein einziges integriertes Skalenmuster kombiniert, wobei das zweite Muster das erste Muster im Wesentlichen überspannt, im Wesentlichen enthält und aus dem ersten Muster teilweise zusammengesetzt ist.

Hier setzt die vorliegende Erfindung an.

Der vorliegenden Erfindung liegt die Aufgabe zugrunde, eine alternative Vorrichtung zur Bestimmung einer Position eines sich bewegenden Teils und ein alternatives Verfahren zu deren Betrieb anzugeben, bei denen ein energiesparender Betrieb ermöglicht ist.

Diese Aufgabe wird durch eine Vorrichtung zur Bestimmung einer Position eines sich bewegenden Teils mit den Merkmalen des Anspruchs 1 gelöst, wonach das Positionserfassungsmittel als ein induktiver und/oder magnetischer und/oder optischer Sensor ausgebildet ist. Hierbei handelt es sich um dem Fachmann bekannte und zur Bestimmung einer Position eines sich bewegenden Teils relativ zu einer Referenzposition geeignete Messprinzipien. Bei den vorgenannten Sensoren handelt es sich somit um erprobte und in einer Vielzahl von Bauformen erhältliche Sensoren. Beispielsweise ist es denkbar, dass voneinander verschiedene Sensoren, also voneinander verschiedene Sensorprinzipien, gleichzeitig erfindungsgemäß eingesetzt werden. Zum einen ist hierdurch eine Redundanz realisiert. Zum anderen ist damit eine ungewünschte Wechselwirkung zwischen mehreren Sensoren wirksam verhinderbar.

Ferner wird diese Aufgabe durch ein Verfahren mit den Merkmalen des Anspruchs 9 gelöst, wonach das Positionserfassungsmittel in Abhängigkeit der Detektion einer Bewegung des sich bewegenden Teils relativ zu der Referenzposition mittels des kapazitiven Sensors automatisch von dessen Energiesparzustand in dessen Positionserfassungszustand überführt wird. Auf diese Weise ist eine automatische Überführung des Positionserfassungsmittels von dem Energiesparzustand in den Positionserfassungszustand ermöglicht, sobald eine Positionserfassung mittels des Positionserfassungsmittels erforderlich ist, nämlich sobald sich das sich bewegende Teil in Bewegung gesetzt hat.

Die Unteransprüche betreffen vorteilhafte Weiterbildungen der Erfindung.

Ein wesentlicher Vorteil der Erfindung liegt insbesondere darin, dass ein energiesparender Betrieb der Vorrichtung zur Bestimmung einer Position eines sich bewegenden Teils auf eine alternative Weise ermöglicht ist. Dies ist insbesondere bei modernen Kraftfahrzeugen vorteilhaft, die über einen hohen Grad an Elektrifizierung verfügen. Besonders vorteilhaft ist die Erfindung beispielsweise für Elektrofahrzeuge, bei denen der Energieverbrauch eine sehr wesentliche Größe ist. Mittels der Erfindung ist es möglich, dass der kapazitive Sensor das Positionserfassungsmittel von einem Energiesparzustand des Positionserfassungsmittels zur Einsparung von Energie automatisch in einen Positionserfassungszustand des Positionserfassungsmittels überführt, sozusagen aufweckt. Dieses Aufwecken ist dabei nahezu ohne Stromfluss realisierbar.

Eine besonders vorteilhafte Weiterbildung der erfindungsgemäßen Vorrichtung sieht vor, dass das Positionserfassungsmittel als ein induktiver Sensor mit einer Sendespule und einer Mehrzahl von Sensorspulen ausgebildet ist und der kapazitive Sensor die Sendespule und die Sensorspulen des induktiven Sensors zur kapazitiven Auswertung umfasst. Hierdurch ist die erfindungsgemäße Vorrichtung auf konstruktiv und schaltungstechnisch besonders einfache Weise realisierbar.

Eine dazu alternative vorteilhafte Weiterbildung der erfindungsgemäßen Vorrichtung sieht vor, dass der kapazitive Sensor eine Mehrzahl von Sendeelektroden und eine Sensorelektrode aufweist, wobei die Sendeelektroden und die Sensorelektrode des kapazitiven Sensors unabhängig von dem Positionserfassungsmittel ausgebildet sind.

Auf diese Weise ist eine auf die Funktion des kapazitiven Sensors abgestimmte Ausbildung des kapazitiven Sensors ermöglicht. Beispielsweise können kapazitiv wirksame Flächen des kapazitiven Sensors entsprechend größer ausgebildet werden, so dass größere Ausgangssignale und damit eine vereinfachte Auswertung dieser Ausgangssignale ermöglicht ist.

Grundsätzlich ist die Vorrichtung zur Bestimmung einer Position eines sich bewegenden Teils nach Art, Funktionsweise, Form, Material, Dimensionierung und Anzahl in weiten geeigneten Grenzen frei wählbar. Entsprechend lässt sich die erfindungsgemäße Vorrichtung und das erfindungsgemäße Verfahren zu deren Betrieb auf eine Vielzahl von Anwendungsfällen und Einbausituationen anpassen.

Eine besonders vorteilhafte Weiterbildung der erfindungsgemäßen Vorrichtung sieht vor, dass die Vorrichtung zur Bestimmung eines Drehwinkels und/oder eines Drehmoments des als sich drehendes Teil ausgebildeten sich bewegenden Teils ausgebildet ist, umfassend ein als Winkelerfassungsmittel ausgebildetes Positionserfassungsmittel zur Erfassung einer Winkelstellung des sich drehenden Teils relativ zu einer Referenzposition und mindestens ein Indexierungsmittel zum Indexieren bei einer vorher festgelegten Drehung, bevorzugt einer 360°-Drehung, des sich drehenden Teils relativ zu der Referenzposition, wobei das Winkelerfassungsmittel einen mit dem sich drehenden Teil drehfest verbundenen und als Rotor mit einem Grundkörper zur Befestigung an dem drehenden Teil und mehreren sich von dem Grundkörper radial nach außen erstreckenden Flügeln ausgebildeten Geber aufweist, und wobei mindestens einer der Flügel des Rotors eine mittels des Indexierungsmittels detektierbare Markierung aufweist. Bei vielen technischen Anwendungen geht es um eine Positionserfassung, also eine Winkelerfassung und/oder eine Drehmomenterfassung, bei sich drehenden Teilen. Insbesondere gilt dies für den Bereich der Kraftfahrzeuge. Rein exemplarisch sei hier nur auf die Lenkwelle und die Erfassung des Lenkwinkels und/oder die Erfassung des Lenkmoments hingewiesen. Bei Anwendungen, bei denen die Positionserfassung in einem Messbereich von Drehwinkeln von mehr als 360° erforderlich ist, bedarf es entsprechend auch eines Indexierungsmittels. Es sind jedoch auch andere Indexierungswinkelbereiche möglich, so dass beispielsweise alle 180° ein Indexignal generiert wird.

Grundsätzlich sind die Flügel des Rotors nach Art, Form, Material, Dimensionierung, Anordnung und Anzahl in weiten geeigneten Grenzen frei wählbar. Beispielsweise ist es denkbar, dass eine Mehrzahl von Flügeln des Rotors eine mittels des Indexierungsmittels detektierbare Markierung aufweisen. Vorteilhafterweise weist lediglich ein einziger Flügel eine mittels des Indexierungsmittels detektierbare Markierung auf. Hierdurch ist eine eineindeutige Indexierung auf einfache Weise realisiert.

Eine andere vorteilhafte Weiterbildung der erfindungsgemäßen Vorrichtung nach Anspruch 4 sieht vor, dass das Indexierungsmittel als ein induktiver und/oder kapazitiver und/oder magnetischer und/oder optischer Sensor ausgebildet ist.

Entsprechend ermöglicht beispielsweise die Verwendung eines Winkelerfassungsmittels, das nach einem ersten Sensorprinzip arbeitet, und die Verwendung eines Indexierungsmittels, das nach einem von dem ersten Sensorprinzip verschiedenen zweiten Sensorprinzip arbeitet, eine wirksame Verhinderung einer ungewünschten Wechselwirkung zwischen dem Winkelerfassungsmittel auf der einen Seite und dem Indexierungsmittel auf der anderen Seite. Weiterhin werden durch diverse Sensorkonzepte hohe Anforderungen bezüglich funktionaler Sicherheit einfacher erfüllt.

Eine besonders vorteilhafte Weiterbildung der erfindungsgemäßen Vorrichtung nach Anspruch 4 sieht vor, dass in einem Erfassungsbereich des Indexierungsmittels ein einziger Flügel eine von einem umlaufenden Rand begrenzte Öffnung aufweist oder alle Flügel bis auf einen einzigen Flügel eine von einem umlaufenden Rand begrenzte Öffnung aufweisen. Auf diese Weise ist die erfindungsgemäße Vorrichtung besonders einfach realisierbar. Beispielsweise kann das Winkelerfassungsmittel als ein induktiver Sensor und das Indexierungsmittel als ein kapazitiver Sensor ausgebildet sein und ein einziger Flügel eine von einem umlaufenden Rand begrenzte Öffnung aufweisen oder alle Flügel bis auf einen einzigen Flügel eine von einem umlaufenden Rand begrenzte Öffnung aufweisen.

Eine weitere vorteilhafte Weiterbildung der erfindungsgemäßen Vorrichtung nach Anspruch 4 sieht vor, dass sich ein einziger Flügel im Vergleich zu den übrigen Flügeln von dem Grundkörper radial weiter nach außen in einen Erfassungsbereich des Indexierungsmittels erstreckt oder sich alle Flügel bis auf einen einzigen Flügel im Vergleich zu dem einzigen Flügel von dem Grundkörper radial weiter nach außen in einen Erfassungsbereich des Indexierungsmittels erstrecken. Zum einen ist hierdurch eine mögliche Alternative zu der vorgenannten Ausführungsform angegeben. Zum anderen kann, bei einer Mehrzahl von Indexierungsmitteln, diese Ausbildung der erfindungsgemäßen Vorrichtung beispielsweise mit der vorgenannten Ausbildung kombiniert werden. Hierdurch ist eine Redundanz auf der Seite des mindestens einen Indexierungsmittels realisiert. Beispielsweise kann das Winkelerfassungsmittel als ein induktiver Sensor und das Indexierungsmittel als ein optischer Sensor ausgebildet sein und sich ein einziger Flügel im Vergleich zu den übrigen Flügeln von dem Grundkörper radial weiter nach außen erstrecken oder sich alle Flügel bis auf einen einzigen Flügel im Vergleich zu dem einzigen Flügel von dem Grundkörper radial weiter nach außen erstrecken.

Eine andere vorteilhafte Weiterbildung der erfindungsgemäßen Vorrichtung nach Anspruch 4 sieht vor, dass das Winkelerfassungsmittel und das Indexierungsmittel jeweils als ein induktiver Sensor ausgebildet sind und ein Stator des Indexierungsmittels mindestens eine Sensorspule aufweist, wobei die Sensorspule und die mindestens eine Markierung des Rotors derart aufeinander abgestimmt ausgebildet und relativ zueinander angeordnet sind, dass die Sensorspule lediglich als Sensorspule für das Indexierungsmittel wirkt. Hierdurch ist zum einen eine weitere Alternative oder zusätzliche Ausbildung der erfindungsgemäßen Vorrichtung angegeben. Zum anderen liegt ein weiterer Vorteil dieser Weiterbildung darin, dass das genaue und robuste Sensorprinzip der induktiven Sensorik sowohl für das Winkelerfassungsmittel wie auch für das Indexierungsmittel verwendet wird.

Eine besonders vorteilhafte Weiterbildung der vorgenannten Ausführungsform der erfindungsgemäßen Vorrichtung sieht vor, dass das Winkelerfassungsmittel eine erste Betriebsfrequenz und das Indexierungsmittel eine zweite Betriebsfrequenz aufweist, wobei sich die erste Betriebsfrequenz und die zweite Betriebsfrequenz voneinander unterscheiden. Auf diese Weise ist eine ungewünschte Wechselwirkung zwischen dem Winkelerfassungsmittel auf der einen Seite und dem Indexierungsmittel auf der anderen Seite, trotz der Verwendung eines induktiven Sensors jeweils für das Winkelerfassungsmittel und das Indexierungsmittel, wirksam verhindert.

Eine weitere vorteilhafte Weiterbildung der erfindungsgemäßen Vorrichtung nach Anspruch 4, wobei das Winkelerfassungsmittel und das Indexierungsmittel jeweils zumindest teilweise auf einer gemeinsamen Leiterplatte angeordnet sind, sieht vor, dass die Leiterplatte als eine mehrlagige Leiterplatte ausgebildet ist und das Winkelerfassungsmittel auf mindestens einer ersten Lage der Leiterplatte und das Indexierungsmittel auf mindestens einer von der ersten Lage verschiedenen zweiten Lage der Leiterplatte angeordnet ist. Hierdurch ist der Aufbau der erfindungsgemäßen Vorrichtung weiter vereinfacht. Zum anderen ist der Platzbedarf mittels der Verwendung einer mehrlagigen Leiterplatte weiter reduziert und die erfindungsgemäße Vorrichtung noch kompakter realisierbar.

Eine vorteilhafte Weiterbildung der letztgenannten Ausführungsform sieht vor, dass mindestens eine der mindestens einen zweiten Lage als eine Abschirmung ausgebildet ist. Auf diese Weise ist eine ungewünschte Wechselwirkung zwischen dem mindestens teilweise auf der mindestens einen ersten Lage angeordneten Winkelerfassungsmittel und dem mindestens teilweise auf der mindestens einen zweiten Lage angeordneten Indexierungsmittel reduziert oder gar verhindert. Die Abschirmung kann darüber hinaus dazu ausgebildet sein, um das Winkelerfassungsmittel und/oder das Indexierungsmittel vor ungewünschten Wechselwirkungen mit Drittbauteilen oder Drittgeräten zu schützen.

Eine besonders vorteilhafte Weiterbildung der erfindungsgemäßen Vorrichtung nach Anspruch 4, rückbezogen auf Anspruch 3, sieht vor, dass die Sendeelektroden und die Sensorelektrode des kapazitiven Sensors jeweils als mindestens ein Kreissektor ausgebildet sind, wobei die Kreissektoren konzentrisch um eine Drehachse des Rotors angeordnet sind. Hierdurch ist es beispielsweise möglich, ausreichend große, kapazitiv wirksame Flächen des kapazitiven Sensors, nämlich die vorgenannten Kreissektoren, auf konstruktiv einfache Weise in Wirkverbindung mit dem Rotor anzuordnen.

Eine dazu alternative vorteilhafte Weiterbildung der erfindungsgemäßen Vorrichtung sieht vor, dass die Sendeelektroden und die Sensorelektrode des kapazitiven Sensors jeweils als mindestens ein Kreisringsegment ausgebildet sind, wobei die Kreisringsegmente konzentrisch um eine Drehachse des Rotors angeordnet sind. Auf diese Weise ist es möglich, den kapazitiven Sensor, nämlich die Kreisringsegmente, außerhalb oder innerhalb von ringförmig um die Drehachse des Rotors angeordneten Strukturen des Positionserfassungsmittels anzuordnen.

Eine besonders vorteilhafte Weiterbildung der vorgenannten Ausführungsform sieht vor, dass das Indexierungsmittel zwei direkt benachbarte Kreisringsegmente und den Rotor umfasst, wobei der Rotor und diese beiden direkt benachbarten Kreisringsegmente zum Indexieren bei einer vorher festgelegten Drehung, bevorzugt einer 360°-Drehung, des sich drehenden Teils relativ zu der Referenzposition geeignet ausgebildet und angeordnet sind. Hierdurch ist ein zusätzliches Indexierungsmittel nicht erforderlich. Entsprechend ist die Anzahl der Bauteile sowie der damit verbundene konstruktive und schaltungstechnische Aufwand reduziert.

Eine andere vorteilhafte Weiterbildung der erfindungsgemäßen Vorrichtung sieht vor, dass das Positionserfassungsmittel und der kapazitive Sensor jeweils zumindest teilweise auf einer gemeinsamen Leiterplatte angeordnet sind und die Leiterplatte als eine mehrlagige Leiterplatte ausgebildet ist. Analog zu oben ergibt sich dadurch unter anderem der Vorteil, dass der Aufbau der erfindungsgemäßen Vorrichtung weiter vereinfacht. Zum anderen ist der Platzbedarf mittels der Verwendung einer mehrlagigen Leiterplatte weiter reduziert und die erfindungsgemäße Vorrichtung noch kompakter realisierbar. Denkbar ist jedoch auch, dass das Positionserfassungsmittel auf mindestens einer ersten Lage der Leiterplatte und der kapazitive Sensor auf mindestens einer von der ersten Lage verschiedenen dritten Lage der Leiterplatte angeordnet ist.

Eine vorteilhafte Weiterbildung des erfindungsgemäßen Verfahrens sieht vor, dass das Positionserfassungsmittel in Abhängigkeit der Detektion einer Bewegung des sich bewegenden Teils relativ zu der Referenzposition mittels des Positionserfassungsmittels automatisch von dessen Positionserfassungszustand in dessen Energiesparzustand überführt wird, sobald sich das sich bewegende Teil nicht mehr bewegt. Auf diese Weise ist auch eine automatische Überführung des

Positionserfassungsmittels von dem Positionserfassungszustand in den Energiesparzustand ermöglicht, sobald sich das sich bewegende Teil nicht mehr bewegt.

Eine weitere vorteilhafte Weiterbildung des erfindungsgemäßen Verfahrens sieht vor, dass der kapazitive Sensor in dem Positionserfassungszustand des Positionserfassungsmittels zur Positionserfassung des sich bewegenden Teils relativ zu der Referenzposition verwendet wird. Hierdurch ist auf konstruktiv und schaltungstechnische einfache Weise eine Redundanz in der Positionserfassung des sich bewegenden Teils in dem Positionserfassungszustand des Positionserfassungsmittels realisierbar.

Anhand der beigefügten, grob schematischen Zeichnung wird die Erfindung nachfolgend näher erläutert. Dabei zeigt:
- Fig. 1: ein erstes Ausführungsbeispiel der erfindungsgemäßen Vorrichtung in einer teilweisen Draufsicht, ohne Geber,
- Fig. 2: das erste Ausführungsbeispiel gemäß Fig. 1 in einer teilweisen Draufsicht auf einen als erster Rotor ausgebildeten Geber,
- Fig. 3: eine exemplarische Darstellung einer mehrlagigen Leiterplatte bei dem ersten Ausführungsbeispiel,
- Fig. 4: ein exemplarisch dargestellter Stromfluss bei dem ersten Ausführungsbeispiel,
- Fig. 5: ein zweites Ausführungsbeispiel der erfindungsgemäßen Vorrichtung in einer teilweisen Draufsicht auf einen zu dem ersten Rotor alternativen zweiten Rotor,
- Fig. 6a: das erste Ausführungsbeispiel in einer teilweisen Seitenansicht,
- Fig. 6b: das erste Ausführungsbeispiel in einer weiteren teilweisen Seitenansicht,
- Fig. 7: ein drittes Ausführungsbeispiel der erfindungsgemäßen Vorrichtung in einer teilweisen Draufsicht, ohne Geber,
- Fig. 8: ein viertes Ausführungsbeispiel der erfindungsgemäßen Vorrichtung in einer teilweisen Draufsicht, ohne Geber und
- Fig. 9: das vierte Ausführungsbeispiel in einer teilweisen Draufsicht auf einen zu dem ersten und dem zweiten Rotor alternativen dritten Rotor.

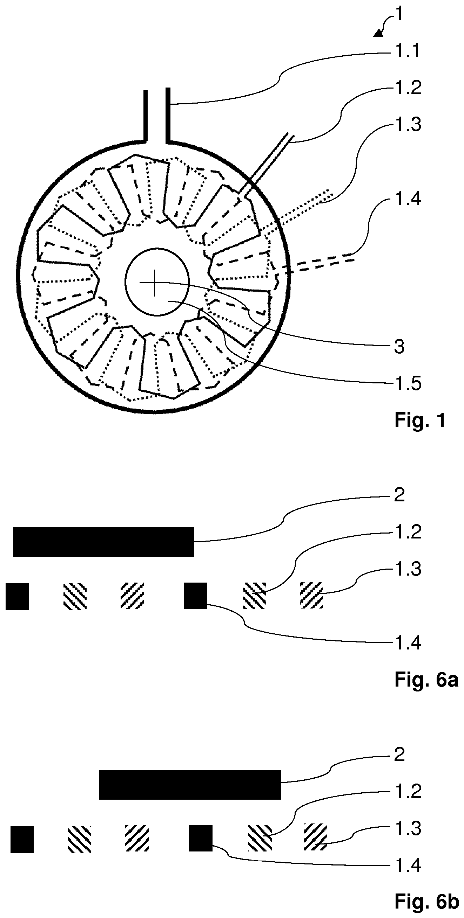

In Fig. 1 ist ein erstes Ausführungsbeispiel einer erfindungsgemäßen Vorrichtung in einer teilweisen Ansicht dargestellt. Die Vorrichtung ist zur Bestimmung eines Drehwinkels und eines Drehmoments eines sich drehenden Teils, nämlich einer Lenkwelle einer nicht dargestellten Servolenkung für ein Kraftfahrzeug, ausgebildet. Die Vorrichtung umfasst zwei jeweils als ein induktiver Sensor ausgebildete Winkelerfassungsmittel zur Erfassung jeweils einer Winkelstellung des sich drehenden Teils relativ zu einer Referenzposition und ein als ein kapazitiver Sensor ausgebildetes Indexierungsmittel zum Indexieren bei einer 360°-Drehung des drehenden Teils relativ zu der Referenzposition, wobei die Winkelerfassungsmittel jeweils einen mit dem drehenden Teil drehfest verbundenen Rotor mit einem Grundkörper zur Befestigung an dem drehenden Teil und mehreren sich von dem Grundkörper radial nach außen erstreckenden Flügeln aufweisen. Entsprechend handelt es sich bei dem sich bewegenden Teil um ein sich um eine Drehachse drehendes Teil und das jeweilige Positionserfassungsmittel ist als ein Winkelerfassungsmittel ausgebildet. Ferner ist der Geber als der Rotor ausgebildet.

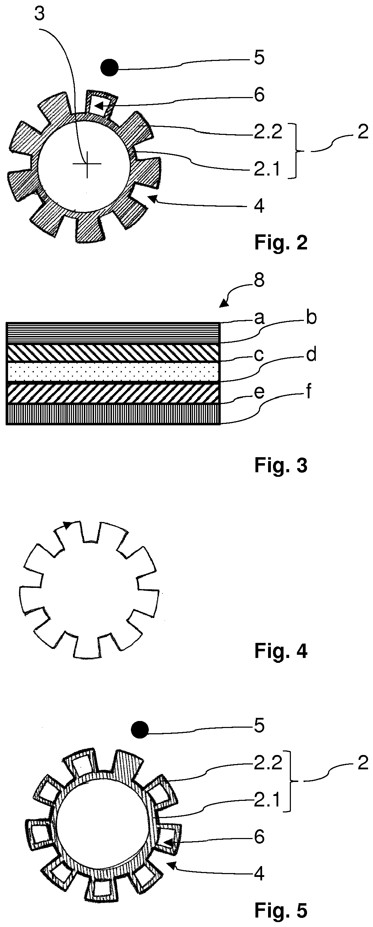

In Fig. 1 ist lediglich eines der beiden Winkelerfassungsmittel teilweise dargestellt, nämlich dessen Stator 1, mit einer kreisringförmigen Sendespule 1.1 und insgesamt drei Sensorspulen 1.2, 1.3 und 1.4, die zueinander identisch aber jeweils um einen bestimmten Winkel um die Drehachse des drehenden Teils zueinander verdreht angeordnet sind. Der dazu korrespondierende Rotor 2 ist mit dem Grundkörper 2.1 und den Flügeln 2.2 in Fig. 2 dargestellt. Die Referenzposition ist in der Fig. 2 mittels eines Punktes 5 symbolisiert. Das Indexierungsmittel sowie das drehende Teil, also die Lenkwelle, sind nicht dargestellt. Die Drehachse ist in den Fig. 1 und 2 jeweils durch ein Kreuz 3 symbolisiert, wobei die Drehachse 3 senkrecht zu den Bildebenen von Fig. 1 und 2 verläuft.

Das drehende Teil, also die Lenkwelle, ist auf dem Fachmann bekannte Weise in zwei Teile geteilt, wobei der eine Teil der Lenkwelle mit einem der Winkelerfassungsmittel, nämlich mit dessen Rotor 2, und der andere Teil der Lenkwelle mit dem anderen der Winkelerfassungsmittel, nämlich mit dessen Rotor, drehfest verbunden ist. Das Indexierungsmittel ist einem der beiden Teile der Lenkwelle zugeordnet. Die beiden Teile der Lenkwelle sind mittels eines Torsionsstabs miteinander auf dem Fachmann bekannte Weise kraftübertragend verbunden. In Fig. 2 ist lediglich der Rotor 2 des Winkelerfassungsmittels dargestellt, das mit dem Indexierungsmittel dem selben Teil der Lenkwelle zugeordnet ist. Jeder Rotor 2 ist aus einem für eine induktive Kopplung geeigneten Metallblech einstückig hergestellt. Der in Fig. 2 dargestellte Rotor 2 weist insgesamt neun Flügel 2.2 auf, die sich vom Grundkörper 2.1 radial nach außen erstrecken. Zwischen den einzelnen Flügeln 2.2 ist jeweils eine Lücke 4 ausgebildet. Die Flügel 2.2 sind um den Umfang des Grundkörpers 2.1 des Rotors 2 regelmäßig angeordnet. Wie aus Fig. 2 ersichtlich ist, weist einer der Flügel 2.2 des Rotors 2 eine von einem umlaufenden Rand begrenzte Öffnung 6 auf. Diese Öffnung 6 ist eine mittels des Indexierungsmittels detektierbare Markierung 6.

Der Rotor des anderen, nicht dargestellten, Winkelerfassungsmittel weist insgesamt achtzehn Flügel auf. Dieser Rotor weist keine mittels eines Indexierungsmittels oder des Indexierungsmittels detektierbare Markierung, beispielsweise in Form einer von einem Rand begrenzten Öffnung in einem von dessen Flügeln, auf. Mittels einer dem Fachmann bekannten Differenzwinkelbestimmung zwischen dem in Fig. 2 teilweise dargestellten Winkelerfassungsmittel und dem nicht dargestellten Winkelerfassungsmittel ist das Drehmoment, mit dem die Lenkwelle beaufschlagt ist, bestimmbar. Der Drehwinkel der Lenkwelle wird mittels des in den Fig. 1 und 2 jeweils teilweise dargestellten Winkelerfassungsmittel, nämlich Stator 1 und Rotor 2, ermittelt. Das Indexierungsmittel dient dazu, auch Drehwinkel von 360° und mehr zu detektieren. Dies ist beispielsweise bei Nutzfahrzeugen wie LKW's oder dergleichen erforderlich.

Jedes der Winkelerfassungsmittel weist neben dem Rotor, beispielsweise Rotor 2, auch einen Stator, beispielsweise Stator 1, auf. Der Stator 1 ist auf dem Fachmann bekannte Weise aufgebaut und weist die Sendespule 1.1 und die drei Sensorspulen 1.2, 1.3, 1.4 auf. Der jeweilige Stator 1 ist bei dem vorliegenden Ausführungsbeispiel auf einer einzigen mehrlagigen Leiterplatte 8 angeordnet, die in Fig. 3 exemplarisch dargestellt ist. Die mehrlagige Leiterplatte 8 weist insgesamt sechs Lagen auf, die in der Fig. 3 mit a, b, c, d, e und f bezeichnet sind. Die einzelnen Lagen a bis f sind auf Leiterplattenmaterial aufgebracht, das in der Fig. 3 zwecks einer besseren Übersichtlichkeit mittels voneinander abweichender Texturen symbolisiert ist. Der Stator 1 des in der Fig. 1 teilweise dargestellten Winkelerfassungsmittels ist auf den Lagen a und b der Leiterplatte 8 angeordnet und der Stator des in Fig. 1 nicht dargestellten Winkelerfassungsmittels ist auf den Lagen e und f der Leiterplatte 8 angeordnet. Auf den Lagen c und d der Leiterplatte 8 ist zum einen das als kapazitiver Sensor ausgebildete Indexierungsmittel angeordnet. Zum anderen sind die Lagen c und d der Leiterplatte 8 zusätzlich als Abschirmung ausgebildet, mittels der eine ungewünschte Wechselwirkung zwischen den als induktive Sensoren ausgebildeten Winkelerfassungsmitteln zumindest reduziert ist, dessen Statoren 1 auf den Lagen a und b sowie auf den Lagen e und f der Leiterplatte 8 angeordnet sind. In Fig. 3 sind lediglich die Lagen a bis f dargestellt, nicht aber die Statoren 1 und das als kapazitiver Sensor ausgebildete Indexierungsmittel.

Ferner ist das jeweilige Winkelerfassungsmittel derart ausgebildet, dass es in einem als Winkelerfassungszustand ausgebildeten Positionserfassungszustand zur Erfassung des Winkels des sich drehenden Teils relativ zu der Referenzposition 5 und in einem Energiesparzustand zur Energieeinsparung betreibbar ist, wobei die Vorrichtung einen den Rotor 2 umfassenden zusätzlichen kapazitiven Sensor aufweist und der Rotor 2 und der Rest des zusätzlichen kapazitiven Sensors derart aufeinander abgestimmt ausgebildet und angeordnet sind, dass in dem Energiesparzustand des jeweiligen Winkelerfassungsmittels mittels des zusätzlichen kapazitiven Sensors eine Bewegung des sich drehenden Teils relativ zu der Referenzposition 5 detektierbar ist und das jeweilige Winkelerfassungsmittel in Abhängigkeit dieser Detektion automatisch von dessen Energiesparzustand in dessen Winkelerfassungszustand überführbar ist. Die beiden Winkelerfassungsmittel, beispielsweise das in den Fig. 1 und 2 jeweils teilweise dargestellte Winkelerfassungsmittel mit dem Stator 1 und dem Rotor 2, sind somit mittels des zusätzlichen kapazitiven Sensors von dem jeweiligen Energiesparzustand automatisch in den jeweiligen Winkelerfassungszustand überführbar.

Bei dem ersten Ausführungsbeispiel ist, wie oben bereits erläutert, das jeweilige als Winkelerfassungsmittel ausgebildete Positionserfassungsmittel als ein induktiver Sensor ausgebildet, beispielsweise das dargestellte Winkelerfassungsmittel mit dem Stator 1, der Sendespule 1.1 und den drei Sensorspulen 1.2, 1.3 und 1.4, wobei der zusätzliche kapazitive Sensor die Sendespule 1.1 und die Sensorspulen 1.2, 1.3 und 1.4 des Stators 1 zur kapazitiven Auswertung umfasst. Der zusätzliche kapazitive Sensor gemäß dem vorliegenden ersten Ausführungsbeispiel verfügt nicht über von diesem Winkelerfassungsmittel separate Sensorstrukturen. Entsprechend sind das dargestellte Winkelerfassungsmittel und der zusätzliche kapazitive Sensor jeweils auf der gemeinsamen Leiterplatte 8 angeordnet.

Im Nachfolgenden wird die erfindungsgemäße Vorrichtung gemäß dem ersten Ausführungsbeispiel und anhand der Fig. 1 bis 4 näher erläutert.

Bei einer Drehung der Lenkwelle, beispielsweise durch einen Lenkeingriff eines Fahrzeugführers des Kraftfahrzeugs, dreht sich die Lenkwelle zum einen relativ zu der Referenzposition 5, so dass mittels des einen Winkelerfassungsmittels, das in Fig. 1 und 2 jeweils teilweise dargestellt ist, der Drehwinkel der Lenkwelle auf dem Fachmann bekannte Weise bestimmt werden kann. Zum anderen verdrehen sich die beiden Teile der Lenkwelle zueinander, was zu einer Torsion des Torsionsstabes führt, so dass mittels der Bestimmung des Differenzwinkels zwischen dem mittels des vorgenannten Winkelerfassungsmittels erfassten Winkels und dem mittels des nicht dargestellten Winkelerfassungsmittel erfassten Winkels auf dem Fachmann bekannte Weise das in die Lenkwelle eingeleitete Drehmoment bestimmt werden kann. Bei der Winkelbestimmung mittels des in der Fig. 1 und 2 jeweils teilweise dargestellten Winkelerfassungsmittels ist die in dem einen Flügel 2.2 angeordnete Öffnung 6, also die mittels des Indexierungsmittels detektierbare Markierung, nicht hinderlich, da der für den induktiven Sensor relevante Stromfluss der in der Fig. 4 dargestellten Geometrie folgt. Wie daraus ersichtlich ist, fließt der Strom entlang der in der Bildebene von Fig. 2 und 4 dargestellten Außenkontur des Rotors 2. Der für die induktive Sensorik erforderliche Stromfluss wird also durch die Öffnung 6 nicht behindert.

Die Öffnung 6, also die Markierung, ist mittels des als kapazitiver Sensor ausgebildeten Indexierungsmittels detektierbar. Entsprechend lassen sich mittels des Indexierungsmittels jeweils 360°-Drehungen des drehenden Teils, also der Lenkwelle, detektieren und so auch Drehwinkel der Lenkwelle von 360° und mehr erfassen. Beispielsweise kann dies immer dann erfolgen, wenn der Flügel 2.2 des Rotors 2 mit der Öffnung 6 die Referenzposition 5 passiert.

Dreht sich die Lenkwelle beispielsweise für die Dauer eines vorher festgelegten Zeitintervalls nicht, so wird das jeweilige als Winkelerfassungsmittel ausgebildete Positionserfassungsmittel automatisch von dessen Positionserfassungszustand in dessen Energiesparzustand überführt. In dem Energiesparzustand der beiden Winkelerfassungsmittel erfolgt eine Positionserfassung, also eine Erfassung des Drehwinkels, lediglich mittels des zusätzlichen kapazitiven Sensors.

Im Unterschied zu dem als Winkelerfassungszustand ausgebildeten Positionserfassungszustands dieses Winkelerfassungsmittels erfolgt anstelle einer induktiven Sensierung in dem Energiesparzustand eine kapazitive Sensierung, wobei beispielsweise die kapazitive Kopplung von zwei der Sensorspulen untereinander, also 1.2 und 1.3 oder 1.2 und 1.4 oder 1.3 und 1.4, detektiert und auf dem Fachmann bekannte Weise ausgewertet wird. Hierfür werden die beiden Sensorspulen, beispielsweise die Sendespulen 1.2 und 1.3, jeweils als Sendeelektroden geschaltet. Die verbleibende Sensorspule 1.4 wird dann als Sensorelektrode verwendet. Die Sendeelektroden, beispielsweise 1.2 und 1.3, werden dabei an unterschiedliche Potentiale gelegt, vorzugsweise werden die Sendelektroden, beispielsweise 1.2 und 1.3, jeweils an eine der Versorgungsspannungen der Winkelerfassungsmittel gelegt. Denkbar ist jedoch auch die Verwendung von heruntergeteilten oder vervielfachten Potentialen, die sich aus den beiden Versorgungsspannungen ergeben. Je nach der Drehlage des Rotors 2 um die Drehachse 3 ist die Kapazität zwischen der Sendeelektrode 1.2 und der Sensorelektrode 1.4 des zusätzlichen kapazitiven Sensors auf der einen Seite und zwischen der Sendeelektrode 1.3 und der Sensorelektrode 1.4 des zusätzlichen kapazitiven Sensors auf der anderen Seite voneinander verschieden. Siehe hierzu beispielsweise die Fig. 6a und 6b, in denen die Kopplung der vorgenannten Paarungen mittels des Rotors 2 exemplarisch für zwei voneinander verschiedene Drehlagen des Rotors 2 und damit der Lenkwelle dargestellt ist. Dieser Unterschied kann dann auf dem Fachmann bekannte Weise zur Positionsbestimmung, also beispielsweise zur Winkelbestimmung, verwendet werden.

Zur Steigerung der Genauigkeit der Positionsbestimmung, also der Positionserfassung, können die einzelnen Sensorspulen 1.2, 1.3 und 1.4 wechselweise als Sendeelektroden und als Sensorelektrode, beispielsweise via Multiplex-Verfahren, verwendet werden. Entsprechend würden bei dem vorliegenden ersten Ausführungsbeispiel insgesamt drei Messergebnisse erzielt.

In anderen Ausführungsformen ist es möglich, dass die drei Sensorspulen 1.2, 1.3 und 1.4 als Sendeelektroden und die Sendespule 1.1 als Sensorelektrode des zusätzlichen kapazitiven Sensors verwendet werden. Hierfür ist beispielsweise ein Zeitmultiplex-Verfahren anwendbar.

Ferner ist es auch möglich, dass beispielsweise die kreisringförmige Sendespule 1.1 mit einer in einem durch die Sensorspulen 1.2, 1.3 und 1.4 begrenzten Inneren angeordneten Elektrode 1.5 den zusätzlichen kapazitiven Sensor ausbildet. Siehe hierzu Fig. 1. In diesem Fall bilden die Sensorspulen 1.2, 1.3 und 1.4 Zwischenkapazitäten, die je nach der Drehlage des Rotors 2 unterschiedliche Anteile eines Sendesignals der Sendelektrode 1.1 und/oder der Sendelektrode 1.5 des zusätzlichen kapazitiven Sensors empfangen. Grundsätzlich ist dies auch bei gleichzeitiger Aussendung eines mittels der als induktive Sensoren ausgebildeten Winkelerfassungsmittel induktiv zu sensierenden magnetischen Feldes möglich.

Durch Auswertung der kapazitiven Kopplung kann also auf eine Änderung der Drehlage des Rotors 2 und damit der Lenkwelle geschlossen werden. Dies ist mit sehr wenig Energieaufwand während des Energiesparzustands möglich. Getriggert durch die vorgenannte Detektierung können dann die energieintensiveren induktiven Winkelerfassungen während des Positionserfassungszustands gestartet werden.

Im Nachfolgenden sind weitere Ausführungsbeispiele der Erfindung exemplarisch dargestellt. Zu dem ersten Ausführungsbeispiel gleiche oder gleichwirkende Bauteile sind mit den gleichen Bezugszeichen versehen. Die weiteren Ausführungsbeispiele werden jeweils lediglich in dem Umfang der Unterschiede zu den vorhergehenden Ausführungsbeispielen erläutert. Ansonsten wird auf die Ausführungen zu den vorhergehenden Ausführungsbeispielen verwiesen.

Fig. 5 zeigt ein zweites Ausführungsbeispiel der erfindungsgemäßen Vorrichtung, wobei sich das zweite Ausführungsbeispiel durch den Rotor von dem ersten Ausführungsbeispiel unterscheidet.

Im Wesentlichen entspricht das zweite Ausführungsbeispiel dem ersten Ausführungsbeispiel, so dass auf die obigen Ausführungen weitestgehend verwiesen wird. Im Unterschied zu dem ersten Ausführungsbeispiel weisen alle Flügel 2.2 bis auf einen einzigen Flügel 2.2 des Rotors 2 eine von einem umlaufenden Rand begrenzte Öffnung 6 auf. Der Rotor 2 des zweiten Ausführungsbeispiels ist somit zu dem Rotor 2 des ersten Ausführungsbeispiels invers ausgebildet. Entsprechend wirkt bei dem zweiten Ausführungsbeispiel der einzige Flügel 2.2 ohne Öffnung 6 als eine mittels des Indexierungsmittels detektierbare Markierung. Im Übrigen entspricht der Aufbau und die Funktionsweise des zweiten Ausführungsbeispiels dem des ersten Ausführungsbeispiels.

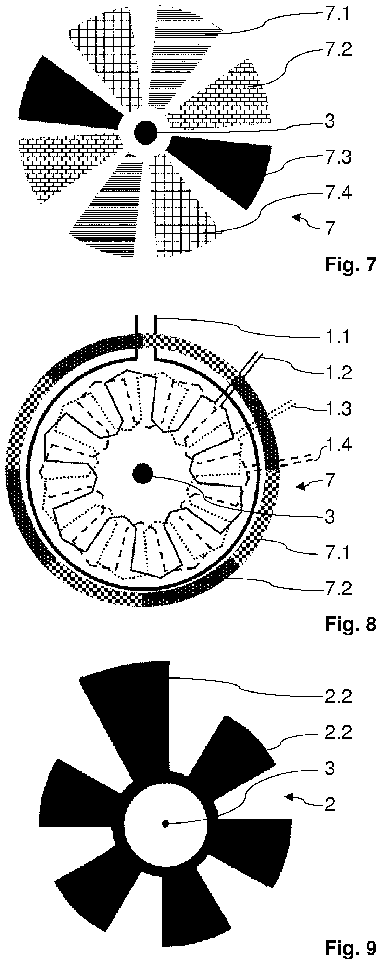

In Fig. 7 ist ein drittes Ausführungsbeispiel der erfindungsgemäßen Vorrichtung gezeigt. Im Unterschied zu dem ersten und dem zweiten Ausführungsbeispiel weist der zusätzlich kapazitive Sensor eine Struktur 7 mit einer Mehrzahl von Sendeelektroden 7.1, 7.2 und 7.3 und einer Sensorelektrode 7.4 auf, wobei die Sendeelektroden 7.1, 7.2 und 7.3 und die Sensorelektrode 7.4 des zusätzlichen kapazitiven Sensors unabhängig von dem Positionserfassungsmittel, also unabhängig von den beiden Winkelerfassungsmitteln, ausgebildet sind. Es werden also nicht die Sendespule 1.1 und die Sensorspulen 1.2, 1.3 und 1.4 des Stators 1 des dargestellten Winkelerfassungsmittels kapazitiv ausgewertet, sondern es wird eine eigene Struktur des zusätzlichen kapazitiven Sensors, nämlich die Struktur 7, verwendet. Gemäß dem dritten Ausführungsbeispiel sind die Sendeelektroden 7.1, 7.2 und 7.3 und die Sensorelektrode 7.4 des zusätzlichen kapazitiven Sensors 7 jeweils als zwei Kreissektoren ausgebildet, wobei die Kreissektoren konzentrisch um die Drehachse 3 des Rotors 2 angeordnet sind. Bei dem vorliegenden Ausführungsbeispiel sind die zwei Kreissektoren, die jeweils der Sendeelektrode 7.1, 7.2 und 7.3 sowie der Sensorelektrode 7.4 zugeordnet sind, einander gegenüberliegend angeordnet und miteinander elektrisch leitend verbunden. Siehe Fig. 7. Beispielsweise können für den zusätzlichen kapazitiven Sensors während des Energiesparzustands der beiden Winkelerfassungsmittel die gleichen Versorgungsanschlüsse verwendet werden, was allgemein als sogenanntes Pin-Sharing bezeichnet wird.

Diese separate Struktur 7 des zusätzlichen kapazitiven Sensors kann beispielsweise zumindest teilweise auf der Leiterplatte 8 gemeinsam mit den Strukturen der beiden Winkelerfassungsmittel und des Indexierungsmittels angeordnet sein, wobei der zusätzliche kapazitive Sensor auf mindestens einer von der ersten und der zweiten Lage verschiedenen, nicht dargestellten Lage der Leiterplatte 8 angeordnet ist.

Die kapazitive Kopplung zwischen allen nicht miteinander verbundenen Elektroden 7.1, 7.2, 7.3 und 7.4 kann nun zyklisch detektiert und auf dem Fachmann bekannte Weise ausgewertet werden, die wiederum von der Drehlage des Rotors 2 um die Drehachse 3, also um die Drehachse der Lenkwelle, abhängig ist.

In einem in den Fig. 8 und 9 dargestellten vierten Ausführungsbeispiel der erfindungsgemäßen Vorrichtung sind die Sendeelektroden 7.1, 7.2 und 7.3 und die Sensorelektrode 7.4 des zusätzlichen kapazitiven Sensors jeweils als zwei einander gegenüberliegende Kreisringsegmente ausgebildet und miteinander elektrisch leitend verbunden, wobei die Kreisringsegmente konzentrisch um die Drehachse 3 des Rotors 2 angeordnet sind. Wie aus Fig. 9 ersichtlich ist, ist der Rotor 2 dieses Ausführungsbeispiels derart modifiziert, dass sich ein Flügel 2.2 des Rotors 2 im Vergleich zu den übrigen Flügeln 2.2 des Rotors 2 radial weiter nach außen erstreckt.

Mittels dieser Ausbildung des zusätzlichen kapazitiven Sensors und des Rotors 2 gemäß dem vierten Ausführungsbeispiel ist es beispielsweise möglich, dass das Indexierungsmittel zwei direkt benachbarte Kreisringsegmente, beispielsweise die Kreisringsegmente 7.1 und 7.2, und den Rotor 2 umfasst, wobei der Rotor 2 und diese beiden direkt benachbarten Kreisringsegmente zum Indexieren bei einer 360°-Drehung des drehenden Teils, also der Lenkwelle, relativ zu der Referenzposition 5 geeignet ausgebildet und angeordnet sind. Entsprechend ist ein zusätzliches Indexierungsmittel, beispielsweise das als kapazitiver Sensor ausgebildete Indexierungsmittel des ersten, zweiten und dritten Ausführungsbeispiels, entbehrlich. Im Unterschied zu dem vorliegenden vierten Ausführungsbeispiel ist es auch möglich, dass eine Mehrzahl von Indexpositionen auf die vorgenannte Weise detektierbar ist. Hierfür ist dann eine entsprechende Modifikation des Rotors erforderlich.

Die Erfindung ist nicht auf die vorliegenden Ausführungsbeispiele begrenzt. Beispielsweise können Drehwinkel und/oder Drehmoment auch von anderen sich drehenden Teilen mittels der erfindungsgemäßen Vorrichtung vorteilhaft ermittelt werden. Anstelle Drehwinkel und Drehmoment zu erfassen kann auch lediglich der Drehwinkel oder das Drehmoment detektiert werden. Ferner sind neben Drehwinkeln auch andersartige Positionserfassungen, beispielsweise bei sich linear bewegenden Teilen, von der Erfindung mit umfasst. Auch ist die Erfindung auch auf anderen Anwendungsgebieten abseits der Automobilindustrie einsetzbar.

Wie bereits erläutert, ist das mindestens eine Winkelerfassungsmittel sowie das mindestens eine Indexierungsmittel in weiten geeigneten Grenzen frei wählbar. Dies gilt auch für das jeweils verwendete Sensorprinzip. Das mindestens eine Winkelerfassungsmittel ist als ein induktiver und/oder magnetischer und/oder optischer Sensor ausgebildet. Ähnliches gilt, sofern vorhanden, für das mindestens eine Indexierungsmittel. Entsprechend sind auch diverse Kombinationen von Sensorprinzipien gleichzeitig, beispielsweise für eine Mehrzahl von Winkelerfassungsmitteln und/oder eine Mehrzahl von Indexierungsmitteln, einsetzbar.

Beispielsweise ist es denkbar, dass sich ein einziger Flügel im Vergleich zu den übrigen Flügeln von dem Grundkörper radial weiter nach außen in einen Erfassungsbereich des Indexierungsmittels erstreckt oder sich alle Flügel bis auf einen einzigen Flügel im Vergleich zu dem einzigen Flügel von dem Grundkörper radial weiter nach außen in einen Erfassungsbereich des Indexierungsmittels erstrecken. Dabei kann das Winkelerfassungsmittel als ein induktiver Sensor und das Indexierungsmittel als ein optischer Sensor ausgebildet sein und sich ein einziger Flügel im Vergleich zu den übrigen Flügeln von dem Grundkörper radial weiter nach außen erstrecken oder sich alle Flügel bis auf einen einzigen Flügel im Vergleich zu dem einzigen Flügel von dem Grundkörper radial weiter nach außen erstrecken. So könnte der optische Sensor relativ zu dem Rotor radial derart nach außen versetzt angeordnet sein, dass der optische Sensor die mittels des optischen Sensors erfassbare Markierung, also den einzigen längeren oder den einzigen kürzeren Flügel des Rotors, detektieren kann.

Bei einer anderen Ausführungsform der erfindungsgemäßen Vorrichtung könnte es sein, dass das Winkelerfassungsmittel und das Indexierungsmittel jeweils als ein induktiver Sensor ausgebildet sind und ein Stator des Indexierungsmittels mindestens eine Sensorspule aufweist, wobei die Sensorspule und die mindestens eine Markierung des Rotors derart aufeinander abgestimmt ausgebildet und relativ zueinander angeordnet sind, dass die Sensorspule lediglich als Sensorspule für das Indexierungsmittel wirkt. So könnte die Sensorspule zur Detektion der Markierung beispielsweise lokal derart begrenzt ausgebildet sein, dass diese Sensorspule, im Unterschied zu mindestens einer weiteren Sensorspule des Winkelerfassungsmittels, einen Erfassungsbereich aufweist, der lediglich einen Flügel und eine zu diesem Flügel benachbarte Lücke gemäß eines der obigen Ausführungsbeispiele umfasst. Bei einem Rotor gemäß der Fig. 2 würde in diese Sensorspule bei einer Drehung des sich drehenden Teils also immer eine im Wesentlichen gleichbleibende Spannung induziert werden. Lediglich bei einem Durchlauf des Flügels mit der Öffnung durch den Erfassungsbereich würde eine von der sonst induzierten Spannung abweichende Spannung in die Sensorspule induziert. Analoges würde für eine Ausführungsform gelten, bei der ein Rotor gemäß der Fig. 5 verwendet würde. Lediglich bei dem Durchlauf des Flügels ohne Öffnung durch den Erfassungsbereich würde eine von der sonst induzierten Spannung abweichende Spannung in die Sensorspule induziert.

Insbesondere bei den beiden letztgenannten Ausführungsformen der erfindungsgemäßen Vorrichtung, bei denen eine Mehrzahl von induktiven Sensoren eingesetzt wird, ist es vorteilhaft, dass das Winkelerfassungsmittel eine erste Betriebsfrequenz und das Indexierungsmittel eine zweite Betriebsfrequenz aufweist, wobei sich die erste Betriebsfrequenz und die zweite Betriebsfrequenz voneinander unterscheiden. Beispielsweise könnte die erste Betriebsfrequenz 3-4 MHz und die zweite Betriebsfrequenz 6-8 MHz betragen. Aufgrund der deutlichen Abweichung der ersten von der zweiten Betriebsfrequenz wäre somit eine ungewünschte Wechselwirkung zwischen den beiden induktiven Sensoren wirksam verhindert. Auch bei einer Mehrzahl von induktiven Winkelerfassungsmitteln wäre diese Weiterbildung der erfindungsgemäßen Anordnung vorteilhaft einsetzbar.

Die Komponenten des mindestens einen Winkelerfassungsmittels und des mindestens einen Indexierungsmittels müssen nicht zwingend zumindest teilweise auf einer einzigen Leiterplatte, insbesondere einer mehrlagigen Leiterplatte, angeordnet sein. Je nach den Erfordernissen des Einzelfalls können die Komponenten des mindestens einen Winkelerfassungsmittels und des mindestens einen Indexierungsmittels auch auf voneinander verschiedenen Leiterplatten oder dergleichen, einlagig oder mehrlagig, angeordnet sein. Gleiches gilt für den kapazitiven Sensor zur automatischen Überführung des Positionserfassungsmittels von dessen Energiesparzustand in dessen Positionserfassungszustand. Darüber hinaus ist ein Indexierungsmittel nicht zwingend erforderlich.

## Patentansprüche

1. Vorrichtung zur Bestimmung einer Position eines sich bewegenden Teils, umfassend ein Positionserfassungsmittel (1, 2) zur Erfassung einer Position des sich bewegenden Teils relativ zu einer Referenzposition (5), wobei das Positionserfassungsmittel (1, 2) einen mit dem sich bewegenden Teil lagefest verbundenen Geber (2) aufweist, und wobei das Positionserfassungsmittel (1, 2) derart ausgebildet ist, dass es in einem Positionserfassungszustand zur Erfassung der Position des sich bewegenden Teils relativ zu der Referenzposition (5) und in einem Energiesparzustand zur Energieeinsparung betreibbar ist, wobei die Vorrichtung einen den Geber (2) umfassenden kapazitiven Sensor (7, 2) aufweist und der Geber (2) und der Rest des kapazitiven Sensors (7) derart aufeinander abgestimmt ausgebildet und angeordnet sind, dass in dem Energiesparzustand des Positionserfassungsmittels (1, 2) mittels des kapazitiven Sensors (7, 2) eine Bewegung des sich bewegenden Teils relativ zu der Referenzposition (5) detektierbar ist und das Positionserfassungsmittel (1, 2) in Abhängigkeit dieser Detektion automatisch von dessen Energiesparzustand in dessen Positionserfassungszustand überführbar ist,
**dadurch gekennzeichnet,**
**dass** das Positionserfassungsmittel (1, 2) als ein induktiver und/oder magnetischer und/oder optischer Sensor ausgebildet ist.

2. Vorrichtung nach Anspruch 1,
**dadurch gekennzeichnet,**
**dass** das Positionserfassungsmittel (1, 2) als ein induktiver Sensor mit einer Sendespule (1.1) und einer Mehrzahl von Sensorspulen (1.2, 1.3, 1.4) ausgebildet ist und der kapazitive Sensor die Sendespule (1.1) und die Sensorspulen (1.2, 1.3, 1.4) des induktiven Sensors zumindest teilweise zur kapazitiven Auswertung umfasst.

3. Vorrichtung nach Anspruch 1,
**dadurch gekennzeichnet,**
**dass** der kapazitive Sensor (7, 2) eine Mehrzahl von Sendeelektroden (7.1, 7.2, 7.3) und eine Sensorelektrode (7.4) aufweist, wobei die Sendeelektroden (7.1, 7.2, 7.3) und die Sensorelektrode (7.4) des kapazitiven Sensors (7, 2) zumindest teilweise unabhängig von dem Positionserfassungsmittel (1, 2) ausgebildet sind.

4. Vorrichtung nach Anspruch 1 bis 3,
**dadurch gekennzeichnet,**
**dass** die Vorrichtung zur Bestimmung eines Drehwinkels und/oder eines Drehmoments des als sich drehendes Teil ausgebildeten sich bewegenden Teils ausgebildet ist, umfassend ein als Winkelerfassungsmittel ausgebildetes Positionserfassungsmittel (1, 2) zur Erfassung einer Winkelstellung des sich drehenden Teils relativ zu einer Referenzposition (5) und mindestens ein Indexierungsmittel zum Indexieren bei einer vorher festgelegten Drehung, bevorzugt einer 360°-Drehung, des sich drehenden Teils relativ zu der Referenzposition (5), wobei das Winkelerfassungsmittel (1, 2) einen mit dem sich drehenden Teil drehfest verbundenen und als Rotor (2) mit einem Grundkörper (2.1) zur Befestigung an dem drehenden Teil und mehreren sich von dem Grundkörper (2.1) radial nach außen erstreckenden Flügeln (2.2) ausgebildeten Geber aufweist, und wobei mindestens einer der Flügel (2.2) des Rotors (2) eine mittels des Indexierungsmittels detektierbare Markierung (6) aufweist.

5. Vorrichtung nach Anspruch 4, rückbezogen auf Anspruch 3,
**dadurch gekennzeichnet,**
**dass** die Sendeelektroden (7.1, 7.2, 7.3) und die Sensorelektrode (7.4) des kapazitiven Sensors (7, 2) jeweils als mindestens ein Kreissektor ausgebildet sind, wobei die Kreissektoren konzentrisch um eine Drehachse (3) des Rotors (2) angeordnet sind.

6. Vorrichtung nach Anspruch 4, rückbezogen auf Anspruch 3,
**dadurch gekennzeichnet,**
**dass** die Sendeelektroden (7.1, 7.2, 7.3) und die Sensorelektrode (7.4) des kapazitiven Sensors (7, 2) jeweils als mindestens ein Kreisringsegment ausgebildet sind, wobei die Kreisringsegmente konzentrisch um eine Drehachse (3) des Rotors (2) angeordnet sind.

7. Vorrichtung nach Anspruch 6,
**dadurch gekennzeichnet,**
**dass** das Indexierungsmittel (7, 2) zwei direkt benachbarte Kreisringsegmente (7.1, 7.2) und den Rotor (2) umfasst, wobei der Rotor (2) und diese beiden direkt benachbarten Kreisringsegmente (7.1, 7.2) zum Indexieren bei einer vorher festgelegten Drehung, bevorzugt einer 360°-Drehung, des sich drehenden Teils relativ zu der Referenzposition (5) geeignet ausgebildet und angeordnet sind.

8. Vorrichtung nach einem der Ansprüche 1 bis 7,
**dadurch gekennzeichnet,**
**dass** das Positionserfassungsmittel (1, 2) und der kapazitive Sensor jeweils zumindest teilweise auf einer gemeinsamen Leiterplatte (8) angeordnet sind und die Leiterplatte (8) als eine mehrlagige Leiterplatte (8) ausgebildet ist.

9. Verfahren zum Betreiben einer Vorrichtung nach einem der Ansprüche 1 bis 8, wobei das Positionserfassungsmittel (1, 2) in Abhängigkeit der Detektion einer Bewegung des sich bewegenden Teils relativ zu der Referenzposition (5) mittels des kapazitiven Sensors (7, 2) automatisch von dessen Energiesparzustand in dessen Positionserfassungszustand überführt wird.

10. Verfahren nach Anspruch 9,
**dadurch gekennzeichnet,**
**dass** das Positionserfassungsmittel (1, 2) in Abhängigkeit der Detektion einer Bewegung des sich bewegenden Teils relativ zu der Referenzposition (5) mittels des Positionserfassungsmittels (1, 2) automatisch von dessen Positionserfassungszustand in dessen Energiesparzustand überführt wird, sobald sich das sich bewegende Teil nicht mehr bewegt.

11. Verfahren nach Anspruch 9 oder 10,
**dadurch gekennzeichnet,**
**dass** der kapazitive Sensor (7, 2) in dem Positionserfassungszustand des Positionserfassungsmittels (1, 2) zur Positionserfassung des sich bewegenden Teils relativ zu der Referenzposition (5) verwendet wird.

## Claims

1. Device for determining a position of a moving part comprising a position detection means (1, 2) for detecting a position of the moving part relative to a reference position (5), where the position detection means (1, 2) features a transmitter (2) connected in a fixed position to the moving part and where the position detection means (1, 2) is designed in such a way that it can be operated in a position detection mode for detecting the position of the moving part relative to the reference position (5) and in an energy-saving mode for conserving energy, where the device features a capacitive sensor (7, 2) comprising the transmitter (2), and the transmitter (2) and the rest of the capacitive sensor (7) are designed to be coordinated with each other and arranged in such a way that in the energy-saving mode of the position detection means (1, 2) a movement of the moving part relative to the reference position (5) can be detected by means of the capacitive sensor (7, 2) and the position detection means (1, 2) can be automatically switched from its energy-saving mode into its position detection mode depending on such detection, **characterized in that**
the position detection means (1, 2) is designed as an inductive and/or magnetic and/or optical sensor.

2. Device in accordance with Claim 1,
**characterized in that**
the position detection means (1, 2) is designed as an inductive sensor with a transmission coil (1.1) and a plurality of sensor coils (1.2, 1.3, 1.4) and that the capacitive sensor comprises the transmission coil (1.1) and the sensor coils (1.2, 1.3, 1.4) of the inductive sensor for at least partial capacitive evaluation.

3. Device in accordance with Claim 1,
**characterized in that**
the capacitive sensor (7, 2) features a plurality of transmission electrodes (7.1, 7.2, 7.3) and a sensor electrode (7.4), where the transmission electrodes (7.1, 7.2, 7.3) and the sensor electrode (7.4) of the capacitive sensor (7, 2) are designed to be at least in part independent on the position detection means (1, 2).

4. Device in accordance with Claims 1 through 3,
**characterized in that**
the device is designed for determining a turning angle and/or a torque of the moving part designed as a rotating part,
comprising a position detection means (1, 2) designed as an angle detection means for detecting an angular position of the rotating part relative to a reference position (5) and at least one means of indexing for indexing at a previously determined rotation, preferentially a 360° rotation of the rotating part relative to the reference position (5), where the angle detection means (1, 2) features a transmitter connected in a torque-proof manner with the rotating part designed as a rotor (2) with a base body (2.1) for fastening to the rotating part and with several blades (2.2) extending radially outwards from the base body (2.1) and where at least one of the blades (2.2) of the rotor (2) features a marking (6) that can be detected by the means of indexing.

5. Device in accordance with Claim 4, referring back to Claim 3,
**characterized in that**
the transmitter electrodes (7.1, 7.2, 7.3) and the sensor electrode (7.4) of the capacitive sensor (7, 2) are each designed as at least one sector of a circle, where the sectors of the circle are arranged concentrically around a rotary axis (3) of the rotor (2).

6. Device in accordance with Claim 4, referring back to Claim 3,
**characterized in that**
the transmitter electrodes (7.1, 7.2, 7.3) and the sensor electrode (7.4) of the capacitive sensor (7, 2) are each designed as at least one circular ring segment, where the circular ring segments are arranged concentrically around a rotary axis (3) of the rotor (2).

7. Device in accordance with Claim 6,
**characterized in that**
the means of indexing (7, 2) comprises two directly adjacent circular ring segments (7.1, 7.2) and the rotor (2), where the rotor (2) and these two immediately adjacent circular ring segments (7.1, 7.2) are designed and arranged in a suitable manner for indexing at a previously determined rotation, preferentially a 360° rotation, of the rotating part relative to the reference position (5).

8. Device in accordance with one of Claims 1 through 7,
**characterized in that**
the position detection means (1, 2) and the capacitive sensor are each at least partially arranged on a shared circuit board (8) and the circuit board (8) is designed as a multilayer circuit board (8).

9. Procedure to operate a device in accordance with one of Claims 1 through 8, where the position detection means (1, 2) is automatically switched by means of the capacitive sensor (7, 2) from its energy-saving mode into its position detection mode depending on the detection of a movement of the moving part relative to the reference position (5).

10. Procedure in accordance with Claim 9,
**characterized in that**
the position detection means (1, 2) is automatically switched by means of the position detection means (1, 2) from its position detection mode into its energy-saving mode depending on the detection of a movement of the moving part relative to the reference position (5) as soon as the moving part is no longer moving.

11. Procedure in accordance with Claim 9 or 10,
**characterized in that**
the capacitive sensor (7, 2) is used in the position determination mode of the position determination means (1, 2) to determine the position of the moving part relative to the reference position (5).

## Revendications

1. Dispositif permettant de déterminer la position d'une pièce en mouvement, comprenant un moyen de détection de position (1, 2) pour détecter la position de la pièce en mouvement par rapport à une position de référence (5), le moyen de détection de position (1, 2) comportant un capteur (2) relié de manière fixe à la pièce en mouvement et le moyen de détection de position (1, 2) étant conçu de sorte qu'il puisse être exploité dans un état de détection de position pour détecter la position de la pièce en mouvement par rapport à la position de référence (5) et dans un état d'économie d'énergie pour économiser de l'énergie, le dispositif présentant un capteur capacitif (7, 2), le capteur (2) et le reste du capteur capacitif (7) étant conçus et disposés l'un par rapport à l'autre de sorte que, dans l'état d'économie d'énergie du moyen de détection de position (1, 2), un mouvement de la pièce en mouvement par rapport à la position de référence (5) puisse être détecté au moyen du capteur capacitif (7, 2) et le moyen de détection de position (1, 2) puisse être transféré automatiquement, en fonction de cette détection, de son état d'économie d'énergie à son état de détection de position,
**caractérisé en ce que**
le moyen de détection de position (1, 2) est conçu comme un capteur inductif et/ou magnétique et/ou optique.

2. Dispositif selon la revendication 1,
**caractérisé en ce que**
le moyen de détection de position (1, 2) est conçu comme un capteur inductif avec une bobine d'émission (1.1) et plusieurs bobines de capteur (1.2, 1.3, 1.4) et que le capteur capacitif comprend au moins partiellement la bobine d'émission (1.1) et les bobines de capteur (1.2, 1.3, 1.4) du capteur inductif pour l'évaluation capacitive.

3. Dispositif selon la revendication 1,
**caractérisé en ce que**
le capteur capacitif (7, 2) comporte plusieurs électrodes d'émission (7.1, 7.2, 7.3) et une électrode de détection (7.4), les électrodes d'émission (7.1, 7.2, 7.3) et l'électrode de détection (7.4) du capteur capacitif (7, 2) étant réalisées au moins partiellement indépendamment du moyen de détection de position (1, 2).

4. Dispositif selon la revendication 1 à 3,
**caractérisé en ce que**
le dispositif est conçu pour déterminer un angle de rotation et/ou un couple de rotation de la pièce mobile réalisée sous la forme d'une pièce rotative,
cette pièce rotative comprenant un moyen de détection de position (1, 2) conçu comme un moyen de détection d'angle pour détecter une position angulaire de la pièce rotative par rapport à une position de référence (5) et au moins un moyen d'indexation pour l'indexation lors d'une rotation prédéterminée, de préférence une rotation de 360°, de la pièce rotative par rapport à la position de référence (5), le moyen de détection d'angle (1, 2) comprenant un rotor (2) relié de manière solidaire en rotation à la pièce rotative et comportant un corps de base (2.1) pour la fixation sur la pièce rotative et plusieurs ailettes (2.2) s'étendant radialement vers l'extérieur à partir du corps de base (2.1), sachant qu'au moins une des ailettes (2.2) du rotor (2) présente un marquage (6) détectable avec le moyen d'indexation.

5. Dispositif selon la revendication 4, en référence à la revendication 3,
**caractérisé en ce que**
les électrodes d'émission (7.1, 7.2, 7.3) et l'électrode de détection (7.4) du capteur capacitif (7, 2) sont réalisées chacune sous la forme d'au moins un secteur circulaire, les secteurs circulaires étant disposés de manière concentrique autour d'un axe de rotation (3) du rotor (2).

6. Dispositif selon la revendication 4, en référence à la revendication 3,
**caractérisé en ce que**
les électrodes d'émission (7.1, 7.2, 7.3) et l'électrode de détection (7.4) du capteur capacitif (7, 2) sont réalisées chacune sous la forme d'au moins un segment d'anneau circulaire, les segments d'anneau circulaire étant disposés de manière concentrique autour d'un axe de rotation (3) du rotor (2).

7. Dispositif selon la revendication 6,
**caractérisé en ce que**
le moyen d'indexation (7, 2) comprend deux segments d'anneau circulaire(7.1, 7.2) directement voisins et le rotor (2), le rotor (2) et ces deux segments d'anneau circulaire (7.1, 7.2) directement voisins étant conçus et disposés de manière appropriée pour l'indexation lors d'une rotation prédéterminée, de préférence une rotation de 360°, de la pièce rotative par rapport à la position de référence (5).

8. Dispositif selon l'une des revendications 1 à 7,
**caractérisé en ce que**
le moyen de détection de position (1, 2) et le capteur capacitif sont respectivement disposés au moins partiellement sur une carte de circuit imprimé commune (8) et **en ce que** la carte de circuit imprimé (8) est conçue comme une carte de circuit imprimé multicouche (8).

9. Procédé permettant l'exploitation d'un dispositif selon l'une des revendications 1 à 8, le moyen de détection de position (1, 2) passant automatiquement de son état d'économie d'énergie à son état de détection de position en fonction de la détection d'un mouvement de la pièce mobile par rapport à la position de référence (5) au moyen du capteur capacitif (7, 2).

10. Procédé selon la revendication 9,
**caractérisé en ce que**
le moyen de détection de position (1, 2) en fonction de la détection d'un mouvement de la pièce mobile par rapport à la position de référence (5) au moyen du moyen de détection de position (1, 2), passe automatiquement de son état de détection de position à son état d'économie d'énergie dès que la pièce mobile ne se déplace plus.

11. Procédé selon la revendication 9 ou 10,
**caractérisé en ce que**
le capteur capacitif (7, 2) est utilisé dans l'état de détection de position du moyen de détection de position (1, 2) pour détecter la position de la pièce mobile par rapport à la position de référence (5).
